# EUROPÄISCHE PATENTSCHRIFT

(11) **EP 4 007 858 B1**
(45) Veröffentlichungstag und Bekanntmachung des Hinweises auf die Patenterteilung: **30.08.2023**
(21) Anmeldenummer: 20750633.8
(22) Anmeldetag: 30.07.2020
(51) Int. Cl.: F16B 39/14, F16B 39/16, F16B 39/282

(54) **SICHERUNGSMUTTER**
LOCKNUT
CONTRE-ÉCROU

(30) Priorität: 02.08.2019 DE 102019120894
(43) Veröffentlichungstag der Anmeldung: 08.06.2022
(73) Patentinhaber: SF Handels- und Besitzgesellschaft mbH, 78554 Aldingen (DE)
(72) Erfinder: FLAIG, Hartmut, 78554 Aldingen (DE)
(74) Vertreter: Liesegang, Eva
(86) Internationale Anmeldenummer: PCT/EP2020/071558
(87) Internationale Veröffentlichungsnummer: WO 2021/023626

(56) Entgegenhaltungen:
- DE-A1- 2 638 560
- DE-C- 838 840
- GB-A- 610 355
- GB-A- 2 287 764
- US-A- 646 898

## Beschreibung

Die Erfindung betrifft eine Sicherungsmutter gemäß dem Oberbegriff von Patentanspruch 1. Derartige Sicherungsmuttern sind beispielsweise aus der DE 26 38 560 C, DE 43 13 809 C1, DE 43 13 845 C1 und WO 2011/000 393 A1 bekannt.

Die Sicherungsmutter ist eine wiederverwendbare Ganzmetall-Mutter, insbesondere Ganzstahl-Mutter mit einem Mutterkörper aus Metall mit Innengewinde und einem sich daran anschließenden Kragen, der zu einer Ringnut verformt wird, um eine Sicherungs-Ringscheibe aus Metall darin zu halten. Die Sicherungsmutter wird hergestellt, indem die Ringscheibe innerhalb des Kragens auf den Mutterkörper aufgelegt wird, der Kragen umgebördelt wird, um die Ringscheibe in der so gebildeten Ringnut zu fixieren, und anschließend das Innengewinde gleichzeitig in dem Mutterkörper und der Ringscheibe geschnitten wird. Dadurch ergibt sich an der inneren Randkante der Sicherungs-Ringscheibe ein dem Muttergewinde entsprechendes Gewinde. Die Ringscheibe und ihr Gewinde werden gegenüber dem Muttergewinde um eine geringe Strecke axial versetzt, beispielsweise um eine Strecke, die in etwa 5-30%, vorzugsweise 10-20% der Gewindesteigung des Muttergewindes entspricht, um die Klemmwirkung der Sicherungsmutter einzustellen. Die Sicherungs-Ringscheibe weist in axialer Richtung eine gewisse Elastizität auf, wobei durch den Versatz des Innengewindes der Ringscheibe die Klemmkraft der Sicherungsmutter einstellbar ist und die Sicherungsmutter diese eingestellte Klemmkraft für viele Schraubvorgänge beibehält.

Derartige Sicherungsmuttern stellen eine wirksame und einfache Schraubensicherung gegen Lösen einer Schraubverbindung her. Es werden keine weiteren Verbindungselemente oder Maschinenelemente und keine weitere Bearbeitung eines Schraubenschafts, Gewindeendes oder Bolzens zur Sicherung der Schraube benötigt. Die Sicherungs-Ringscheibe bildet ein Klemmteil, das beim Einschrauben einer Schraube oder eines Bolzens elastisch verformt werden kann. Dadurch ergeben sich radiale und axiale Haltekräfte, die über den Versatz der Sicherungs-Ringscheibe eingestellt werden können. Die Sicherungsmutter gewährleistet auch bei großen Temperaturschwankungen und Vibrationen eine dauerhafte Verbindung

Diese bekannte Sicherungsmutter weist ausgezeichnete Sicherungseigenschaften auf und hat sich deshalb auf dem Markt durchgesetzt. Zur Erhöhung der Elastizität der Sicherungs-Ringscheibe, die z.B. bei bestimmten Muttergrößen oder bei extremen Temperaturbelastungen wünschenswert sein kann, schlagen die obengenannten Dokumente vor, die Ringscheibe mit in radialer Richtung variabler Dicke, mit segmentartigen Umfangsaussparungen an ihrem Außenumfang und/oder mit zusätzlichen Kerben am Außenumfang zu versehen. Dadurch ist es möglich, die Ringscheibe aus einem hart elastischen Material, wie Federstahl, herzustellen und dennoch die erforderliche Elastizität für die gewünschte axiale Auslenkung zu erreichen, wobei gleichwohl die elastische Rückstellkraft der Ringscheibe so groß bleibt, dass sich hohe Haltekräfte erzielen lassen. Da die Ringscheibe aus einem Material besteht, das zumindest gleich hart ist wie dasjenige des Mutterkörpers, bleiben die Gewindegänge der Ringscheibe nach vielen Schraubenvorgängen unbeschädigt, so dass die Sicherungsmutter mehrfach gelöst und wieder angezogen werden kann, ohne dass dabei eine merkbare Änderung der Klemmkraft in Sicherungsstellung auftritt. Es können Materialien zum Einsatz kommen, die sehr hohen Temperaturen widerstehen, was beispielsweise bei Verwendung in Kraftfahrzeugen von großer Bedeutung ist.

Die genannten Dokumente schlagen brauchbare Lösungen für die Optimierung der Elastizität der Sicherungs-Ringscheibe vor. In der Praxis hat sich jedoch gezeigt, dass die Fixierung der Sicherungs-Ringscheibe in der Ringnut noch verbessert werden könnte.

Aus dem Stand der Technik sind auch Sicherungsmuttern mit einem Sicherungs- und Dichtungsring aus Kunststoff bekannt, der ähnlich wie bei der gattungsgemäßen Sicherungsmutter an einem Kragen des Mutterkörpers gehalten ist. Solche Sicherungsmuttern sind beispielsweise beschrieben in EP 0 047 061 A1, DE-A-1 815 585, DE 36 40 225 C2, DE 84 24 281 U1, US-A-4,019,550, US-A-3,275,054, US-A-3,316,338, US-A-2,450,694, US-A-5,454,675. Diese Sicherungsmuttern beruhen jedoch auf einem anderen Wirkungsprinzip. Ein zunächst gewindeloser Abschnitt eines Sicherungs- und Dichtungsrings aus Kunststoff schließt sich unmittelbar an das Innengewinde der Mutter an und steht geringfügig über das Innengewinde vor. Beim Einschrauben eines Bolzens schneidet dieser in den Innenumfang der Sicherungs- und Dichtungsscheibe ein. Das Gros der genannten Schriften befasst sich mit der Aufnahme des ausweichenden Kunststoffmaterials beim Einschrauben des Bolzens.

Die Lehre dieses Standes der Technik ist in Bezug auf die Einstellung der Elastizität und Haltekraft der Sicherungs-Ringscheibe unter anderem deshalb nicht übertragbar auf eine Ganzmetall-Sicherungsmutter, weil sich die Kunststoff-Ringscheibe hinsichtlich ihrer Elastizität anders verhält als eine Ringscheibe aus Metall und weil bei diesem Stand der Technik kein axialer Versatz der Innengewinde von Ringscheibe und Mutterkörper vorgesehen ist. Die Haltekraft dieser Sicherungsmuttern beruht auf einem anderen Wirkungsprinzip.

Es ist eine Aufgabe der Erfindung, die Zuverlässigkeit der Ganzmetall-Sicherungsmutter weiter zu optimieren.

Diese Aufgabe wird durch eine Sicherungsmutter gemäß Patentanspruch 1 und durch ein Verfahren gemäß Anspruch 20 gelöst. Ausgestaltungen sind in den abhängigen Ansprüchen angegeben.

Die Erfindung sieht eine Sicherungsmutter mit einem Mutterkörper vor, der einen Gewindeabschnitt mit Innengewinde, eine sich daran anschließende umlaufende Schulter und einen die Schulter umgebenden Kragen aufweist, und mit einer Ringscheibe aus Metall, wobei die Ringscheibe innerhalb des Kragens auf der Schulter aufliegt und der Kragen nach innen umgebogen ist, um zwischen dem umgebogenen Kragen und der Schulter eine Ringnut zu bilden, in der die Ringscheibe aufgenommen ist. Am inneren Umfang der Ringscheibe ist ein dem Innengewinde des Gewindeabschnitts des Mutterkörpers entsprechendes Innengewinde eingeschnitten, und das Innengewinde der Ringscheibe ist gegenüber dem Innengewinde des Mutterkörpers axial um eine Strecke versetzt. Zur besseren Fixierung der Ringscheibe in der Ringnut ist an der Schulter oder an der Ringscheibe dort, wo die Ringscheibe und die Schulter einander überlappen, eine Reihe von Vorsprüngen oder Vertiefungen ausgebildet, die in axialer Richtung vorstehen und um den Umfang der Schulter oder der Ringscheibe verteilt angeordnet sind. Die Vorsprünge oder Vertiefungen bilden Auflageflächen, -linien oder - punkte für die Ringscheibe auf der Schulter, wenn die Ringscheibe innerhalb des Kragens auf die Schulter des Mutterkörpers aufgelegt wird. Beim Verformen des Kragens zur Ausbildung der Ringnut wird auf die Ringscheibe eine axiale Kraft ausgeübt, wobei die Vorsprünge oder Vertiefungen bzw. das verbleibende Material zwischen den Vertiefungen teilweise verformt werden und/oder teilweise in die gegenüberliegende Fläche, der Ringscheibe oder der Schulter, gedrückt werden. Dadurch wird die Ringscheibe in der Ringnut kraft- und formschlüssig gehalten. Die auf der Schulter oder an der Ringscheibe ausgebildeten Vorsprünge bzw. das Material zwischen den Vertiefungen graben/gräbt sich beim Verformen des Kragens ein Stück weit in die gegenüberliegende Oberfläche der Ringscheibe oder der Schulter ein und sichern so die Ringscheibe innerhalb der Ringnut gegen Verdrehen. Ferner erlauben die Vorsprünge bzw. Vertiefungen eine präzisere Einstellung des axialen Versatzes der Ringscheibe, weil sie nachgiebiger sind als eine durchgehende oder gestufte Oberfläche der Schulter oder der Ringscheibe.

In verschiedenen Ausgestaltungen sind die Vorsprünge oder Vertiefungen radial ausgerichtet und um den Umfang der Schulter oder der Ringscheibe gleichmäßig verteilt angeordnet. Dadurch erhält man eine gute Ausrichtung der Ringscheibe senkrecht zur Achse des Mutterkörpers.

Abhängig von der Größe der Sicherungsmutter kann eine andere Anzahl von Vorsprüngen oder Vertiefungen radial gewählt sein, wobei in verschiedenen Ausgestaltungen mindestens 16 Vorsprünge oder Vertiefungen vorgesehen sind. Es können beispielsweise auch mindestens 24 oder 40 Vorsprünge oder Vertiefungen radial vorgesehen sein.

Die Vorsprünge bzw. das verbleibende Material zwischen den Vertiefungen können unterschiedliche Formen haben. In verschiedenen Ausgestaltungen haben die Vorsprünge bzw. das verbleibende Material die Form einer konvexen Wölbung, insbesondere eines kreisförmigen oder ovalen Doms oder eines liegenden Halbkreiszylinders, oder eine eckige oder spitze Form, insbesondere die Form eines liegenden Dreieckszylinders oder eines Tetraeders, oder näherungsweise eine solche Form. Besonders gute Ergebnisse wurden erzielt mit Vorsprüngen bzw. verbleibendem Material zwischen den Vertiefungen in Form eines unregelmäßigen Tetraeders.

Wenn die Vorsprünge oder Vertiefungen auf der Schulter ausgebildet sind, kann z.B. eine erste Fläche des Tetraeders an den Kragen angrenzen und eine zweite Fläche des Tetraeders an die Schulter angrenzen, sodass das die Höhe des Tetraeders in radialer Richtung von Kragen in Richtung des Innenumfangs der Schulter abnimmt. Dabei kann sich der Vorsprung bzw. das verbleibende Material zwischen den Vertiefungen, zum Beispiel das Tetraeder, in radialer Richtung über die gesamte oder über nur einen Teil der Schulter erstrecken, beispielsweise vom Kragen bis über 1/2 bis 4/5 der radialen Abmessung der Schulter.

Wenn die Vorsprünge oder Vertiefungen auf der Ringscheibe ausgebildet sind, kann z.B. eine erste Fläche des Tetraeders mit dem Außenumfang der Ringscheibe fluchten und eine zweite Fläche des Tetraeders kann an die Ringscheibe angrenzen, sodass das die Höhe des Tetraeders in radialer Richtung von Außenumfang der Ringscheibe in Richtung des Innenumfangs der Ringscheibe abnimmt. Dabei kann sich der Vorsprung bzw. das verbleibende Material zwischen den Vertiefungen, zum Beispiel das Tetraeder, in radialer Richtung über die gesamte oder über nur einen Teil der Ringscheibe erstrecken, beispielsweise vom Außenumfang der Ringscheibe bis über 1/2 bis 4/5 der radialen Abmessung der Ringscheibe.

In verschiedenen Ausgestaltungen weist die Schulter eine Schulterfläche auf, die relativ zu einer Radialebene der Sicherungsmutter um einen Winkel α_s geneigt ist, wobei α_s im Bereich von etwa 0° bis 15° liegt oder ungefähr 5°, oder 10° beträgt. Auch die Vorsprünge bzw. das verbleibende Material zwischen den Vertiefungen können eine Scheitellinie aufweisen, die relativ zu einer Radialebene der Sicherungsmutter um einen Winkel α_v geneigt ist, wobei α_v > α_s, und wobei α_v z.B. im Bereich von 30° bis 60° liegt oder ungefähr 40°, 45° oder 50° beträgt.

In verschiedenen Ausgestaltungen ist die Breite B der Vorsprünge oder Vertiefungen im Verhältnis zum Mittenabstand A der Vorsprünge dort, wo sie an den Kragen angrenzen, gleich oder ungefähr gleich B = b * A, wobei b im Bereich von 0,2 bis 1, spezieller von 0,5 bis 1 liegt oder ungefähr 1 oder ungefähr 0,5 beträgt. Die maximale Höhe der Vorsprünge bzw. des verbleibenden Materials zwischen den Vertiefungen kann ungefähr gleich ihrer Breite sein oder im Bereich von der halben Breite bis zur doppelten Breite liegen. Die maximale Höhe der Vorsprünge 40 bzw. des verbleibenden Materials zwischen den Vertiefungen kann abhängig sein von der Dicke der Sicherung-Ringscheibe 22 und beispielsweise das 0,25-fache der Scheibendicke bis zu einer Scheibendicke betragen. Die Breite der Vorsprünge und/oder die Höhe der Vorsprünge bzw. des verbleibenden Materials zwischen den Vertiefungen kann in radialer Richtung nach Innen abnehmen.

In einer weiteren Ausgestaltung sind auf der Schulter des Mutterkörpers in Umfangsrichtung ausgerichtete Vorsprünge gebildet. Die Vorsprünge können beispielsweise dadurch gebildet werden, dass auf der Schulter des Mutterkörpers eine in Umfangsrichtung umlaufende ein- oder mehrteilige Rippe gebildet ist, in die durch das Aufnehmen der Ringscheibe in der Ringnut Vertiefungen eingeformt sind, welche die Rippe in mehrere in Umfangsrichtung ausgerichtete Vorsprünge umformen. Zum Beispiel kann eine einteilige Rippe gebildet werden, indem ein stirnseitiger Einstich in die Schulter angrenzend an den Kragen gebildet wird, zum Beispiel durch Drehbearbeitung des Mutterkörpers. Wenn die Ringscheibe an ihrem Umfang Klauen oder andere Fortsätze aufweist, können diese beim Umbördeln des Kragens des Mutterkörpers in die Rippe eindringen und in dadurch gebildete Vertiefungen in der Rippe zu liegen kommen. Dadurch wird die Ringscheibe in dem Mutterkörper gegen Verdrehen gesichert.

In einer weiteren Ausgestaltung sind auf der Oberfläche der Ringscheibe, die der Schulter des Mutterkörpers zugewandt ist, in Umfangsrichtung ausgerichtete Vorsprünge gebildet. Die Vorsprünge können beispielsweise dadurch gebildet werden, dass auf der Oberfläche der Ringscheibe eine in Umfangsrichtung umlaufende ein- oder mehrteilige Rippe gebildet ist, in die beim Aufnehmen der Ringscheibe in der Ringnut Vertiefungen eingeformt sind, welche die Rippe in mehrere in Umfangsrichtung ausgerichtete Vorsprünge umformen. Zum Beispiel kann eine einteilige Rippe gebildet werden, indem ein stirnseitiger Einstich in die Oberfläche der Ringscheibe gebildet wird, zum Beispiel durch Drehbearbeitung der Ringscheibe. Wenn die Schulter des Mutterkörpers an ihrem Umfang Klauen oder andere Fortsätze aufweist, können diese beim Umbördeln des Kragens des Mutterkörpers in die Rippe eindringen und in dadurch gebildete Vertiefungen in der Rippe zu liegen kommen. Dadurch wird die Ringscheibe in dem Mutterkörper gegen Verdrehen gesichert.

In verschiedenen Ausgestaltungen kann die Ringscheibe eine konstante Dicke haben, oder die Dicke der Ringscheibe kann an ihrem Innendurchmesser größer sein als die Dicke der Ringscheibe an ihrem Außendurchmesser.

In verschiedenen Ausgestaltungen wird die Ringscheibe relativ zu dem Mutterkörper derart verlagert, dass das Innengewinde der Ringscheibe gegenüber dem Innengewinde des Mutterkörpers axial um eine Strecke versetzt ist, die ungefähr 5-30% insbesondere 10-20% der Gewindesteigung des Innengewindes beträgt. Zum Beispiel ist das Innengewinde der Ringscheibe axial gegenüber dem Innengewinde des Mutterkörpers um eine Strecke versetzt ist, die ungefähr 10% oder 20% der Gewindesteigung beträgt. Durch den Versatz der Ringscheibe und ihres Innengewindes kann die Klemmkraft der Sicherungsmutter eingestellt werden.

In verschiedenen Ausgestaltungen ist die Dicke der Ringscheibe an ihrem Innendurchmesser gleich oder ungefähr gleich einer Gewindesteigung des Innengewindes oder sie beträgt zwischen einer Gewindesteigung und dem 1,5-fachen einer Gewindesteigung.

In verschiedenen Ausgestaltungen ist die Ringscheibe in Richtung der Stirnseite der Sicherungsmutter konvex gewölbt.

In verschiedenen Ausgestaltungen sind in den äußeren Umfang der Ringscheibe mehrere über den Umfang der Ringscheibe verteilte Aussparungen und/oder Krallen eingeformt

Die Ringscheibe besteht aus Metall, insbesondere aus federndem Stahl. Auch der Mutterkörper besteht aus Metall, insbesondere Stahl.

Die Erfindung sieht auch ein Verfahren zum Herstellen einer Sicherungsmutter der oben erläuterten Art vor. Die Ringscheibe wird innerhalb des Kragens auf die Schulter des noch gewindelosen Mutterkörpers aufgelegt. Eine erste Kraft wird in axialer Richtung auf den Kragen ausgeübt wird, um den Kragen nach innen zu verformen, auch als "Umbördeln" bezeichnet, und zwischen dem umgebördelten Kragen und der Schulter eine Ringnut zu bilden, in der die Ringscheibe axial eingeklemmt wird. Beim Ausüben der ersten Kraft werden die Vorsprünge bzw. das verbleibende Material zwischen den Vertiefungen um einer erste Strecke verformt und graben sich ein Stück in die gegenüberliegende Fläche ein. Anschließend wird in einem einzigen Arbeitsgang ein Innengewinde in den Mutterkörper und die Ringscheibe geschnitten, wobei die Ringscheibe in der Ringnut durch die Vorsprünge gegen Verdrehen gesichert ist. Anschließend wird eine zweite Kraft in axialer Richtung auf den Kragen und die Ringnut, in der die Ringscheibe eingeklemmt ist, ausgeübt, um die Ringscheibe in axialer Richtung zu verlagern. Beim Ausüben der zweiten Kraft werden die Vorsprünge bzw. das verbleibende Material zwischen den Vertiefungen um eine zweite Strecke verformt. Die Vorsprünge bzw. das verbleibende Material zwischen den Vertiefungen erlauben eine präzise und gleichmäßige Absenkung der Scheibe in axialer Richtung und somit eine präzise Einstellung des Gewindeversatzes. Ferner erzielen die Vorsprünge bzw. das verbleibende Material zwischen den Vertiefungen zusätzlich zu der kraftschlüssigen Fixierung der Ringscheibe in der Ringnut auch eine formschlüssige Verbindung zwischen der Ringscheibe und dem Mutterkörper, welche die Ringscheibe gegen Verdrehen in der Ringnut sichert. Die ist besonders vorteilhaft beim Schneiden des Gewindes, weil die Ringscheibe während des Schneidvorgangs nicht verdreht werden kann.

In einem weiteren Beispiel umfasst das Verfahren zum Herstellen einer Sicherungsmutter die Bildung einer umlaufenden Rippe auf der Schulter des Mutterkörpers durch einen stirnseitigen Einstich in die Schulter angrenzend an den Kragen. Anschließend wird die Ringscheibe innerhalb des Kragens auf die Schulter des noch gewindelosen Mutterkörpers aufgelegt und eine erste Kraft in axialer Richtung auf den Kragen ausgeübt, um den Kragen nach innen umzubördeln und zwischen dem umgebördelten Kragen und der Schulter eine Ringnut zu bilden, in der die Ringscheibe axial eingeklemmt wird, wobei beim Ausüben der ersten Kraft die am Außenumfang der Ringscheibe gebildeten Klauen in die umlaufende Rippe eindringen und in so gebildeten Vertiefungen in der Rippe zu liegen kommen.

Anschließend kann in einem einzigen Arbeitsgang ein Innengewinde in den Mutterkörper und die Ringscheibe geschnitten werden, um dann eine zweite Kraft in axialer Richtung auf den Kragen und die Ringnut, in der die Ringscheibe eingeklemmt ist, auszuüben, um die Ringscheibe in axialer Richtung zu verlagern, wobei beim Ausüben der zweiten Kraft die Klauen um eine weitere Strecke in die Rippe eindringen.

Umgekehrt kann eine umlaufende Rippe auch auf einer Oberfläche der Ringscheibe, die der Schulter zugewandt ist, ausgebildet werden, und entsprechende Vorsprünge oder Klauen können auf der Schulter des Mutterkörpers in Umfangsrichtung ausgerichtet werden, sodass sich die Vorsprünge oder Klauen beim Umbördeln des Kragens in die Rippe auf der Ringscheibe eingraben.

Das Zusammenwirken zwischen der Rippe und den Klauen erlaubt eine präzise und gleichmäßige Absenkung der Scheibe in axialer Richtung und somit eine präzise Einstellung des Gewindeversatzes. Ferner erzielen die dabei gebildeten Vorsprünge und Vertiefungen zusätzlich zu der kraftschlüssigen Fixierung der Ringscheibe in der Ringnut auch eine formschlüssige Verbindung zwischen der Ringscheibe und dem Mutterkörper, welche die Ringscheibe gegen Verdrehen in der Ringnut sichert. Die ist besonders vorteilhaft beim Schneiden des Gewindes, weil die Ringscheibe während des Schneidvorgangs nicht verdreht werden kann.

In verschiedenen Ausgestaltungen wird die Ringscheibe in einem Vorverarbeitungsschritt mit konvexer Wölbung hergestellt wird und so auf die Schulter des Mutterkörpers aufgelegt, dass die Ringscheibe in Richtung der Stirnseite der Sicherungsmutter konvex gewölbt ist, wobei die konvexe Wölbung der Ringscheibe bei der Verformung beibehalten oder im Wesentlichen beibehalten wird.

Die Erfindung ist im Folgenden anhand einer Ausführung mit Bezug auf die Zeichnungen näher erläutert. In den Figuren zeigen:
- Fig. 1: eine perspektivische Darstellung eines Mutterkörpers der Sicherungsmutter von oben, vor dem Einfügen der Sicherungs-Ringscheibe, gemäß einem Beispiel;
- Fig. 2: eine perspektivische Darstellung eines Mutterkörpers der Sicherungsmutter von unten, gemäß dem Beispiel;
- Fig. 3: eine vertikale Teilschnittdarstellung des Mutterkörpers der Fig. 1;
- Fig. 4: eine Draufsicht auf die Sicherungsmutter zur Erläuterung von Schnittebenen der Figuren 5 und 6;
- Fig. 5: einen vertikalen Schnitt durch eine Sicherungsmutter mit Mutterkörper und fixierter Sicherungs-Ringscheibe entlang der Schnittlinie A-A in Fig. 4 und 13, gemäß dem Beispiel;
- Fig. 6: einen vertikalen Schnitt durch eine Sicherungsmutter mit Mutterkörper und fixierter Sicherungs-Ringscheibe entlang der Schnittlinie B-B in Fig. 4 und 13, gemäß dem Beispiel;
- Fig. 7: eine vergrößerte perspektivische Darstellung des Ausschnitts Y in Fig. 5;
- Fig. 8: eine vergrößerte perspektivische Darstellung des Ausschnitts X in Fig. 6;
- Fig. 9: eine perspektivische Längsschnittdarstellung der Sicherungsmutter der Fig. 6 bis 8;
- Fig. 10: eine perspektivische Darstellung einer Sicherungsmutter von oben, mit eingespannter Sicherungs-Ringscheibe gemäß dem Beispiel;
- Fig. 11: eine ähnliche Ansicht wie Fig. 10, wobei die Sicherungs-Ringscheibe ausgeblendet ist;
- Fig. 12: eine perspektivische Darstellung einer Sicherungs-Ringscheibe gemäß einem Beispiel;
- Fig. 13: eine Draufsicht auf die Sicherungs-Ringscheibe gemäß dem Beispiel, bevor diese in die Sicherungs-Mutter eingesetzt wird;
- Fig. 14: eine ähnliche Ansicht wie Fig. 13, wobei die Sicherung-Ringscheibe einer fertigen Sicherungs-Mutter entnommen wurde;
- Fig. 15: eine Draufsicht auf die Sicherungs-Ringscheibe gemäß einem weiteren Beispiel;
- Fig. 16: eine Schnittdarstellung durch die Sicherung-Ringscheibe der Figur 15 entlang der Linie A-A;
- Fig. 17: eine Draufsicht auf die Sicherungs-Ringscheibe gemäß einem weiteren Beispiel;
- Fig. 18: eine Schnittdarstellung durch die Sicherung-Ringscheibe der Figur 17 entlang der Linie B-B;
- Fig. 19: einen vertikalen Schnitt durch einen Mutterkörper einer Sicherungsmutter entlang der Schnittlinie A-A in Fig. 21, gemäß einem weiteren Beispiel;
- Fig. 20: eine vergrößerte perspektivische Darstellung des Ausschnitts B in Fig. 19;
- Fig. 21: eine Draufsicht auf den Mutterkörper gemäß dem Beispiel der Fig. 19;
- Fig. 22: eine perspektivische Darstellung des Mutterkörpers gemäß dem Beispiel der Fig. 19, vor dem Einsetzen der Ringscheibe;
- Fig. 23: eine ähnliche Schnittdarstellung durch den Mutterkörper wie in Fig. 19, nachdem eine Ringscheibe eingesetzt war und wieder entnommen wurde, zur Erläuterung des Beispiels;
- Fig. 24: eine perspektivische Darstellung des Mutterkörpers der Fig. 23; und
- Fig. 25: eine Draufsicht auf den Mutterkörper der Fig. 23.

Die Figuren beziehen sich auf ein Ausführungsbeispiel, wobei Änderungen vorgenommen werden können, beispielsweise wie in den oben beschriebenen Ausgestaltungen. Der besseren Übersichtlichkeit halber sind nicht alle Merkmale in allen Figuren mit Bezugszeichen versehen. Ein Fachmann wird jedoch erkennen, dass die Figuren jeweils entsprechende Merkmale der Sicherungsmutter zeigen.

In den verschiedenen Figuren ist eine Sicherungsmutter 10 dargestellt, die einen Mutterkörper 12 und eine Sicherung-Ringscheibe 22 aufweist. Die Sicherungsmutter 10 ist beispielsweise als Sechskantmutter aus Stahl hergestellt; d.h. Mutterkörper und Ringscheibe sind in dem Beispiel aus Stahl hergestellt. In dem dargestellten Beispiel weist der Mutterkörper 12 einen konzentrischen Kragen 14 an einer Stirnseite auf und hat ein Kernloch 16, dessen Durchmesser abhängig von der Größe der Mutter und dem Innendurchmesser des zu schneidenden Gewindes ist. In den Figuren ist nur das Kernloch 16 dargestellt, wobei in diesem in fertig gestelltem Zustand der Sicherungsmutter ein Innengewinde geschnitten ist, das im Folgenden auch als "Muttergewinde" bezeichnet wird. Der innere Rand oder Innenumfang 18 des Kragens 14 ist gegenüber dem Kernlochdurchmesser der Sicherungsmutter 10 nach außen versetzt, um zwischen dem Kernloch 16 und dem Kragen 14 eine Schulter 20 zur Aufnahme der Sicherungs-Ringscheibe 22 zu bilden.

Der Innendurchmesser D_{K} des Kragens beträgt etwa das 1,2-fache bis 1,5-fache des Kernlochdurchmessers D, D_{K} = 1,2^{∗}D bis 1,5^{∗}D, z.B. etwa das 1,3-fache des Kernlochdurchmessers D. Die Höhe des Kragens 14 ist abhängig von der Dicke der Sicherung-Ringscheibe 22 und kann zum Beispiel ungefähr das Doppelte der Dicke der Sicherung-Ringscheibe 22 betragen, wobei die Dicke der Sicherung-Ringscheibe 22 ungefähr zwischen einer Gewindesteigung und dem 1,5-fachen einer Gewindesteigung der Sicherungsmutter 10 liegen kann. Die Höhe des Kragens 14 ist so gewählt, dass die Sicherung-Ringscheibe 12 bei Umbördeln des Kragens sicher eingeklemmt werden kann, wie unten beschrieben. Der Kragen 14 hat eine grundsätzlich konische Form, wobei seine Dicke (gemessen in radialer Richtung) von der Stirnseite der Sicherungsmutter in axialer Richtung zunimmt. Über die Dicke des Kragens kann dessen Klemm- und Haltekraft nach dem Umbördeln eingestellt werden, wie unten erläutert ist.

Die Sicherungs-Ringscheibe 22, im Folgenden auch kurz als Ringscheibe bezeichnet, ist aus Metall hergestellt, vorzugsweise aus einem federnden Metall, wie Federstahl oder Federbandstahl.

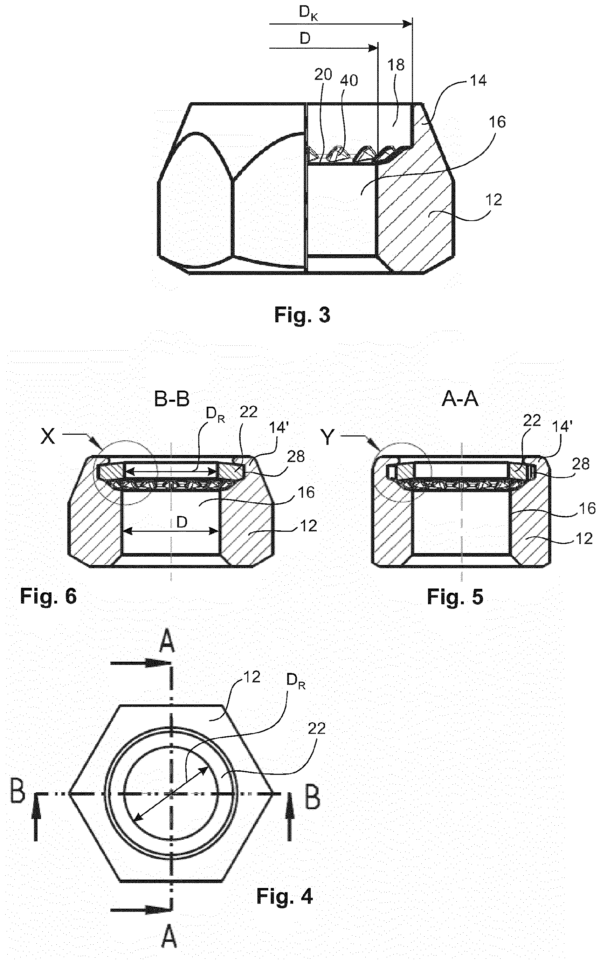

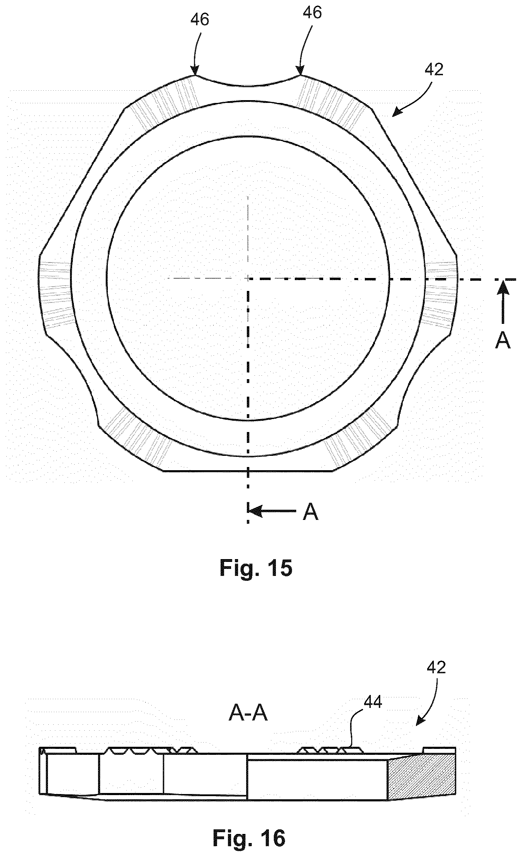

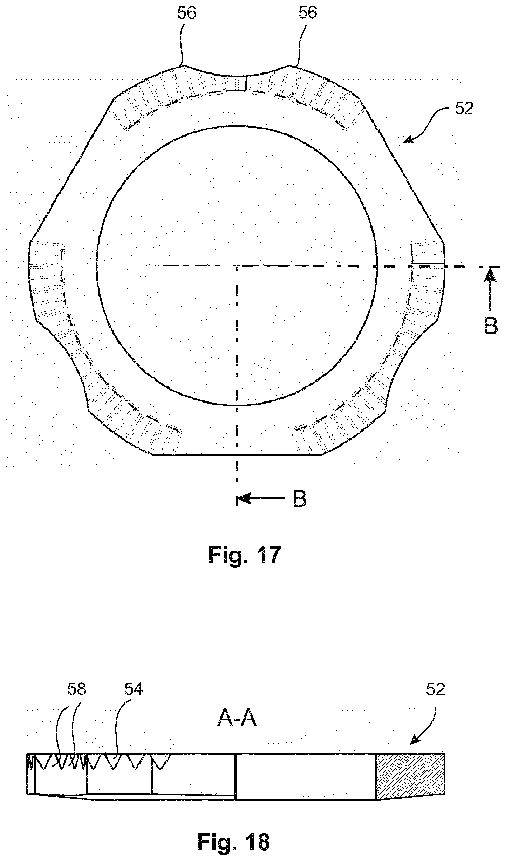

Auf der Schulter 20 ist eine Reihe von Vorsprüngen 40 ausgebildet ist, die in axialer Richtung vorstehen, an die Innenwand 18 des Kragens 14 angrenzen und um den Umfang der Schulter verteilt angeordnet sind. Das folgende Beispiel bezieht sich auf eine Ausgestaltung, in der die Vorsprünge 40 auf der Schulter 20 ausgebildet sind. In einer anderen Ausgestaltung können die Vorsprünge oder Vertiefungen alternativ auf einer Seite der Ringscheibe ausgebildet sein, die der Schulter 20 zugewandt ist, wenn die Ringscheibe in den Mutterkörper eingelegt ist, um die gleiche oder im Wesentlichen die gleiche Wirkung zu erzielen, wie mit Bezug auf die Figuren 5 bis 9 beschrieben ist. In noch anderen Ausgestaltungen sind in der Schulter Vertiefungen ausgebildet, ähnlich wie mit Bezug auf die Ringscheibe in den Figuren 16 und 17 gezeigt, wobei das verbleibende Material zwischen den Vertiefungen eine ähnlich Funktion hat wie die oben beschriebenen Vorsprünge.

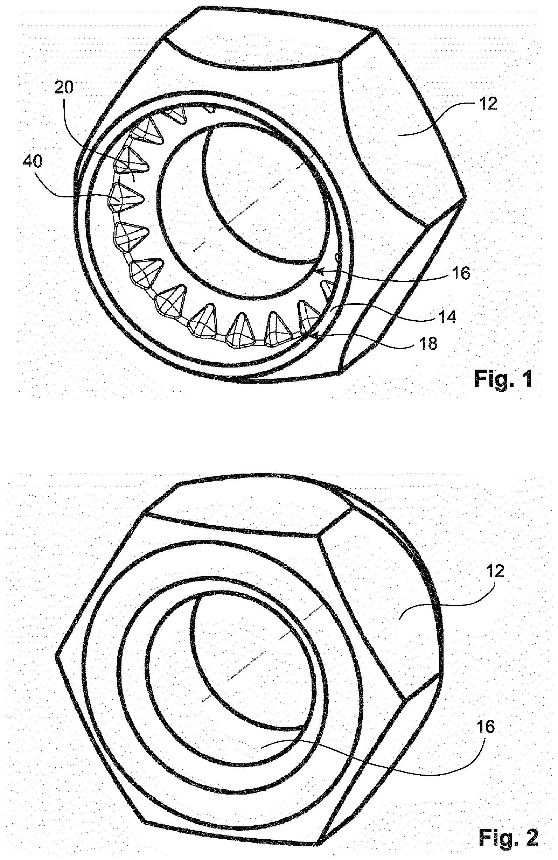

In dem in den Fig. 1 bis 16 gezeigten Beispiel haben die Vorsprünge 40 die Form eines unregelmäßigen Tetraeders, wobei eine Fläche jedes Tetraeders an die Innenwand 18 des Kragens angrenzt und eine benachbarte Fläche an die Schulter 20 angrenzt, und wobei die zwei weiteren Seiten des Tetraeders eine Keilform einschließen. Die an die Schulter 20 angrenzende Fläche bildet die Basis des Vorsprungs 40. Die Scheitellinie der keilförmigen Vorsprünge 40 ist relativ zur Oberfläche der Schulter 20 geneigt, so dass die Höhe der Vorsprünge 40 über der Schulter 20 von der Innenwand 18 des Kragens 14 in Richtung der Achse der Sicherungsmutter abnimmt.

Die Vorsprünge 40 bilden in dem Beispiel eine gleichmäßige Zahnreihe, wobei die Vorsprünge 40 radial ausgerichtet und um den Umfang der Schulter oder der Ringscheibe gleichmäßig verteilt angeordnet sind. In verschiedenen Ausgestaltungen können mindestens 12, 16, 24 oder mindestens 40 Vorsprünge vorgesehen sein, je nach Größe und Einsatzgebiet der Sicherungsmutter. Eine Sicherungsmutter der Größe M8 kann z.B. mindestens 16 Vorsprünge, z.B. 20 Vorsprünge aufweisen, eine Sicherungsmutter der Größe M12 kann z.B. mindestens 20 Vorsprünge aufweisen, und eine Sicherungsmutter der Größe M16 kann z.B. mindestens 40 Vorsprünge aufweisen. Die Anzahl der Vorsprünge kann abhängig sein vom Umfang des Kernlochs 16 oder der Innenwand 18 des Kragens 14. Die Höhe der Vorsprünge 22, gemessen ab der Schulter 20, kann in einem Beispiel etwa ein Drittel der Höhe des Kragens 14 betragen. Die Höhe der Vorsprünge 40 kann auch abhängig sein von der Dicke der Sicherung-Ringscheibe 22 und beispielsweise das 0,25-fache der Scheibendicke bis zu einer Scheibendicke betragen.

In dem Beispiel einer Sicherungsmutter der Größe M12 kann der Innendurchmesser des Kragens 14 zum Beispiel etwa 12-15 mm betragen. Die Höhe des Kragens 14, gemessen ab seiner Kontaktlinie mit der Schulter 20, kann etwa 3,5 mm betragen. Sieht man in diesem Beispiel 24 Vorsprünge vor, so haben diese einen Mittenabstand von etwa 2 mm oder 15°. Die Vorsprünge können eine maximale Breite von 2 mm an ihrer Basis, an der breitesten Stelle, haben. Die Breite der Vorsprünge an ihrer Basis, an der breitesten Stelle, kann zum Beispiel etwa 1.8 mm, etwa 1,5 mm oder etwa 1 mm betragen. Die Höhe der Vorsprünge über der Schulter, an ihrer höchsten Stelle, kann zum Beispiel etwa im Bereich von 0,5 mm bis 2 mm, beispielsweise bei etwa 1 mm liegen. Die Dicke der Ringscheibe 22 kann etwa im Bereich von 1,5 mm bis 2,5 mm liegen.

In dem Beispiel einer Sicherungsmutter der Größe M20 kann der Innendurchmesser des Kragens 14 zum Beispiel etwa 20-25 mm betragen. Die Höhe des Kragens 14, gemessen ab seiner Kontaktlinie mit der Schulter 20, kann etwa 5 mm betragen. Sieht man in diesem Beispiel 32 Vorsprünge vor, so haben diese einen Mittenabstand von etwa 2 mm oder 11,25°. Die Vorsprünge können eine maximale Breite von 2 mm an ihrer Basis, an der breitesten Stelle, haben. Die Breite der Vorsprünge an ihrer Basis, an der breitesten Stelle, kann zum Beispiel etwa 1.8 mm, etwa 1,5 mm oder etwa 1 mm betragen. Die Höhe der Vorsprünge über der Schulter, an ihrer höchsten Stelle, kann zum Beispiel etwa im Bereich von 0,5 mm bis 3 mm, beispielsweise bei etwa 0,6, 1,5 oder 2,5 mm liegen. Die Dicke der Ringscheibe 22 kann etwa im Bereich von 1,5 mm bis 4 mm und spezieller im Bereich von 2,5 mm bis 3,75 mm liegen.

Die Vorsprünge können an ihrer Basis, an der breitesten Stelle, grundsätzlich aneinander angrenzen oder mit einem geringen Abstand von zum Beispiel 0,5 mm bis 2 mm, oder bei sehr großen Sicherungsmuttern auch bis 5 mm oder bis 1 cm angeordnet sein.

Während in dem gezeigten Beispiel die Vorsprünge keilförmig, mit geneigter Scheitellinie sind, können die Vorsprünge auch andere Formen haben, zum Beispiel die einer konvexen Wölbung, insbesondere eines kreisförmigen oder ovalen Doms oder eines liegenden Halbkreiszylinders, oder andere eckige Formen, insbesondere eines liegenden Dreieckszylinders, eines Satteldachs, eines nicht geneigten Keils oder eines anderen Tetraeders oder Polyeders. Auch Abwandlungen solcher Formen, beispielsweise mit abgerundeten oder beschnittenen Ecken, liegen im Bereich der Erfindung. In Bezug auf die Breite, Höhe und Abstand der Vorsprünge gilt grundsätzlich das oben Gesagte.

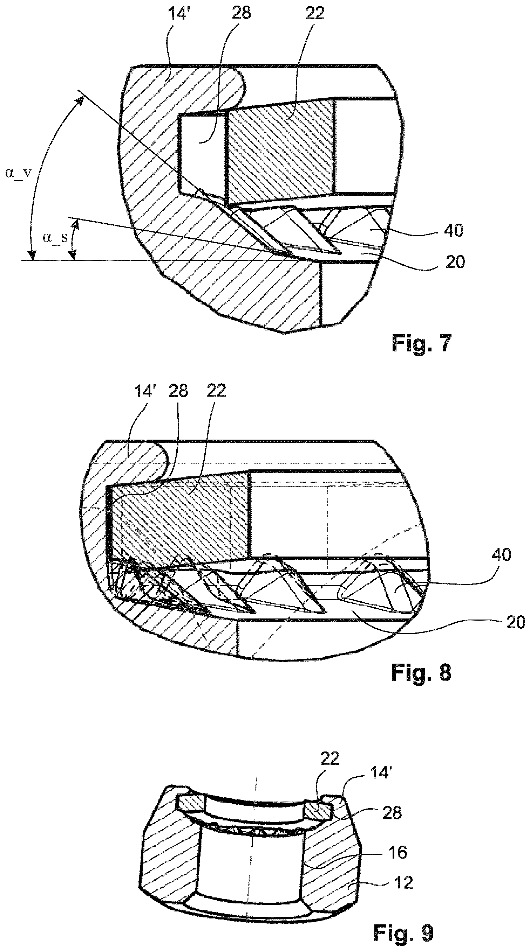

Die Schulter 20 kann relativ zu einer Radialebene der Sicherungsmutter 10 ausgerichtet sein und somit mit der Innenfläche 18 des Kragens 14 einen rechten Winkel einschließen, oder sie kann relativ zu der Radialebene leicht geneigt sein und von dem Kragen 14 in Richtung nach radial innen abfallen. Die Schulter 20 kann beispielsweise relativ zu der Radialebene um einen Winkel α_s geneigt sein, der zum Beispiel bis zu 20°, beispielsweise ungefähr 10° betragen kann. Die Scheitellinie der Vorsprünge kann einen Neigungswinkel α_v relativ zu derselben Radialebene haben, der zum Beispiel in der Größenordnung von 30° bis 60°, beispielsweise bei etwa 45° liegt. Diese Winkel sind in der Darstellung der Fig. 7 eingezeichnet, in der die Neigung der Schulter und die Neigung der Vorsprünge am besten zu erkennen ist.

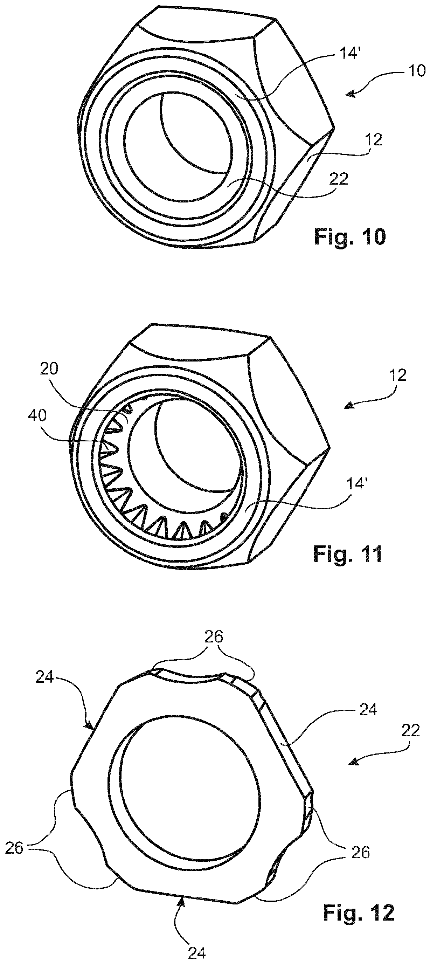

Ein Beispiel der Ringscheibe 22 ist in den Fig. 12 bis 14 dargestellt. Sie weist einen Kernlochdurchmesser D_{R} auf, der gleich dem Kernlochdurchmesser D des Mutterkörpers 12 oder geringfügig kleiner ist. In dem in Fig. 12 bis 14 dargestellten Beispiel weist die Ringscheibe 22 drei Aussparungen 24 auf, an denen Kreissegmente am Außenumfang der Ringscheibe 22 fehlen. Zwischen den drei Aussparungen 24 ist an dem Umfang der Ringscheibe 22 jeweils ein Klauenpaar 26 gebildet. Wie unten dargelegt, wird die Ringscheibe 22 jeweils im Bereich der Klauenpaare 26, zwischen den Kreissegment förmigen Aussparungen 24, durch Umbördeln des Kragens 14 in dem Mutterkörper 12 fixiert.

Die Ringscheibe 22 kann eine gleichmäßige Dicke aufweisen, oder die Dicke der Ringscheibe 22 kann an ihrem Innendurchmesser größer sein als an ihrem Außendurchmesser. Durch die Variation der Dicke der Sicherungs-Ringscheibe 22 über ihrem Durchmesser kann die Elastizität der Ringscheibe und somit die Haltekraft der Sicherungsmutter eingestellt werden. Zum Beispiel kann die Dicke der Ringscheibe 22 an ihrem Außendurchmesser gleich oder geringer als die Höhe einer Gewindesteigung des Muttergewindes sein, z.B. liegt sie im Bereich von einer halben bis einer Gewindesteigung. Die Dicke am Außendurchmesser kann z.B. ungefähr drei Viertel einer Gewindesteigung entsprechen. Die Dicke der Ringscheibe 22 an ihrem Innendurchmesser kann größer oder gleich eine Gewindesteigung und kleiner oder gleich 2,5 Gewindesteigungen sein. Z.B. liegt die Dicke am Innendurchmesser zwischen einer und zwei Gewindesteigungen, beispielsweise bei ungefähr 1,5 Gewindesteigung. Bei einer Dicke der Ringscheibe an ihrem Innendurchmesser von mehr als zwei Gewindesteigungen tritt in der Praxis in den meisten Anwendungsfällen ein zu hohes Bremsmoment der Sicherungsmutter beim Einschrauben eines Bolzens ein, wobei das Bremsmoment und die Haltekraft auch abhängig sind von den Gesamtabmessungen der Sicherungsmutter und des Muttergewindes sowie von der Größe des axialen Versatzes des Gewindes der Ringscheibe 22 relativ zu dem Muttergewinde.

Bei der Herstellung der Sicherungsmutter wird die Ringscheibe 22 zunächst auf die durch den Kragen 14 eingegrenzte Schulter 20 aufgelegt, wobei die Ringscheibe 22 in diesem vormontiertem Zustand eine konvexe Wölbung in Richtung der Stirnseite der Sicherungsmutter haben kann, wie in den Figuren 5 und 6 besonders gut zu erkennen ist.

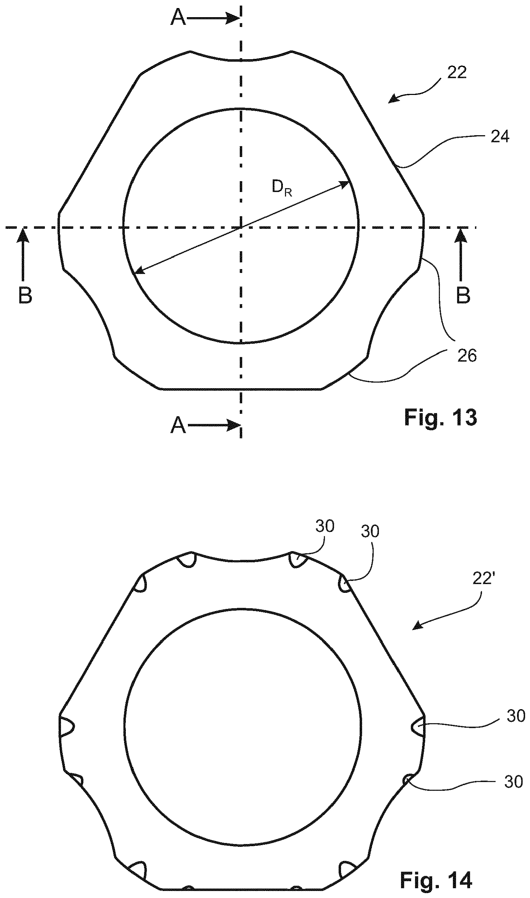

Anschließend wird, wie in den Figuren 5 bis 9 dargestellt, der Kragen 14 an seinem oberen Ende mittels eines Druckstempels oder dergleichen durch Umbördeln verformt und eingezogen, so dass eine Ringnut 28 gebildet wird, in der die Ringscheibe 22 axial unverschieblich gehalten ist. Der umgebogene Kragen ist mit 14' bezeichnet. Zum Umbördeln des Kragens 14 wird eine erste Presskraft aufgebracht, die ausreichend ist, den Kragen zu verformen und bei der Verformung die Ringscheibe 22 derart auf die Vorsprünge 40 zu drücken, dass diese ein Stück weit in das Material der Ringscheibe 22 eindringen. Beispielsweise kann die Presskraft so eingestellt werden, dass die Vorsprünge 40 bis zu ein Drittel ihrer Höhe in das Material der Ringscheibe 22 eindringen. Dadurch wird die Ringscheibe 22 innerhalb der Ringnut 28 nicht nur in axialer Richtung fixiert, sondern auch gegen Verdrehen gesichert. Dieser Zustand ist in den Figuren 5 bis 9 illustriert, wobei die Figuren 5 und 7 Schnittdarstellungen zeigen, deren Schnittebenen A-A und B-B relativ zur Ausrichtung der Sicherung-Ringscheibe 22 in Fig. 4 und 13 illustriert sind. Die Schnittebene A-A der Fig. 5 schneidet eine der Aussparungen 24 und einen gegenüberliegenden Zwischenraum zwischen einem Klauenpaar 26, sodass die Ringscheibe 22 an diesen Stellen nicht an die Innenwand 18 des Kragens 14 angrenzt. Die Schnittebene B-B schneidet zwei gegenüberliegende Klauen 26, sodass die Ringscheibe 22 an diesen Stellen an die Innenwand 18 des Kragens 14 angrenzt.

Nach der Festlegung der Ringscheibe 22 in der Ringnut 28 wird mit einem Schneidwerkzeug ein Innengewinde gleichzeitig in den Mutterkörper 12 und in die Ringscheibe 22 geschnitten, sodass der Mutterkörper 12 und die Ringscheibe 22 gleiche und durchlaufende Gewinde aufweisen (in den Figuren nicht dargestellt). Da die Vorsprünge 40 teilweise in das Material der Ringscheibe 22 eingedrückt sind, ist die Ringscheibe 22 während des Gewindeschneidens gegen Verdrehen gesichert. Die Klauen 26 können eine zusätzliche Verdrehsicherung bereitstellen.

Darauf wird mittels desselben oder eines anderen Druckstempels eine zweite Presskraft auf den umgebördelten Kragen 14' aufgebracht, wodurch die Ringscheibe 22 geringfügig axial in Richtung zum Muttergewinde verlagert wird, so dass das Muttergewinde und das Innengewinde der Ringscheibe 22 gegeneinander axial versetzt werden. Der axiale Versatz der Ringscheibe 22 kann etwa 5-30% vorzugsweise 10-20% einer Gewindesteigung entsprechen, so dass der Versatz der beiden Gewinde gegeneinander zwischen einem Viertel und der Hälfte eines Gewindegangs liegt. Die zweite Presskraft kann ungefähr gleich der ersten Presskraft sein und wird so eingestellt, dass ein gewünschter Versatz der Gewinde von Mutterkörper 12 und Ringscheibe 22 erzielt wird. Dieser gewünschte Versatz kann beispielsweise abhängig von einem gewünschten Halte-Drehmoment der Sicherungsmutter eingestellt werden. Da die Sicherung-Ringscheibe nicht flächig auf der Schulter 20, sondern auf den Vorsprüngen 40 aufliegt, lässt sich der axiale Versatz der Sicherung-Ringscheibe 22 gleichmäßig und präzise einstellen. Dabei können die Vorsprünge 40 verformt werden und/oder weiter in das Material der Ringscheibe 22 eindringen.

Fig. 13 und 14 zeigen ein Beispiel einer Sicherung-Ringscheibe 22' vor und nach der Fertigstellung der Sicherungsmutter, wobei Einsenkungen 30, die durch das Eindringen der Vorsprünge 40 gebildet werden, in Fig. 14 illustriert sind. Die Einsenkungen 30 liegen in dem Bereich der Sicherungs-Ringscheibe 22', der zwischen den Vorsprüngen 40 und dem umgebördelten Kragen 14' eingeklemmt ist.

Fig. 15 und 16 zeigen ein weiteres Beispiel einer Ringscheibe 42, auf deren Oberfläche Vorsprünge 44 ausgebildet sind. Die Geometrie der Ringscheibe 42 kann, bis auf die Ausbildung der Vorsprünge 44 grundsätzlich gleich oder ähnlich sein wie mit Bezug auf Fig. 12 bis 14 beschrieben. Auf die obige Beschreibung der Fig. 12 bis 14 wird Bezug genommen.

In dem Beispiel der Fig. 15 und 16 sind um den Umfang der Ringscheibe 42 verteilt sechs Gruppen von je drei Vorsprüngen 44 jeweils auf den Klauen 46 vorgesehen. Dies ist nur ein Beispiel, und es können verschieden viele Vorsprünge vorgesehen und auch anders angeordnet, gruppiert oder gleichmäßig verteilt und auch anders gestaltet sein als in Fig. 15 und 16 gezeigt. In dem Beispiel der Fig. 15 und 16 können die Vorsprünge 44 ähnlich ausgebildet sein wie die Vorsprünge 40 auf der Schulter 20 der Sicherungsmutter. Dies gilt insbesondere in Bezug auf die Form, Abmessungen und relative Anordnung der Vorsprünge 44. Auf die obige Beschreibung wird Bezug genommen.

Die Ringscheibe 42 der Figuren 15 und 16 kann gepaart werden mit einer Sicherungsmutter, auf deren Schulter keine Vorsprünge oder Vertiefungen ausgebildet sein müssen, die also eine glatte Oberfläche haben kann. Die Herstellung der fertigen Sicherungsmutter kann grundsätzlich wie mit Bezug auf die Figuren 5 bis 9 erläutert erfolgen, wobei in dem Beispiel der Figuren 15 und 16 nicht Vorsprünge auf der Schulter sondern die Vorsprünge 44 auf der Ringscheibe 42 verformt werden. Auf die obige Beschreibung der Figuren 5 bis 9 wird Bezug genommen. xxx

Fig. 17 und 18 zeigen ein noch weiteres Beispiel einer Ringscheibe 52, auf deren Oberfläche Vertiefungen 54 ausgebildet sind. Die Geometrie der Ringscheibe 52 kann, bis auf die Ausbildung der Vertiefungen 54 grundsätzlich gleich oder ähnlich wie mit Bezug auf Fig. 12 bis 14 beschrieben sein. Auf die obige Beschreibung der Fig. 12 bis 14 wird Bezug genommen.

In dem Beispiel der Fig. 17 und 18 sind um den Umfang der Ringscheibe 52 verteilt drei Gruppen von je elf Vertiefungen 54 jeweils auf und zwischen den Klauen 56 ausgebildet. Dies ist selbstverständlich nur ein Beispiel, und es können verschieden viele Vertiefungen vorgesehen und auch anders angeordnet, gruppiert und gestaltet sein als in Fig. 17 und 18 gezeigt. In dem Beispiel der Figuren sei 17 und 18 ergeben sich aus dem zwischen den Vertiefungen 54 verbleibenden Material zahn- oder rippenartige Strukturen 58, die ähnlich ausgebildet sein können wie die Vorsprünge 40 auf der Schulter 20 der Sicherungsmutter 10. Dies gilt insbesondere in Bezug auf die Form, Abmessungen und relative Anordnung der zahn- oder rippenartigen Strukturen 58. Auf die obige Beschreibung der Vorsprünge wird Bezug genommen.

Die Ringscheibe 52 der Figuren 17 und 18 kann gepaart werden mit einer Sicherungsmutter 10, auf deren Schulter keine Vorsprünge oder Vertiefungen ausgebildet sein müssen, die also eine glatte Oberfläche haben kann. Die Herstellung der Sicherungsmutter kann grundsätzlich wie mit Bezug auf die Figuren 5 bis 9 erläutert erfolgen, wobei in dem Beispiel der Figuren 17 und 18 nicht Vorsprünge auf der Schulter sondern die zahn- oder rippenartigen Strukturen 58 auf der Ringscheibe 52 verformt werden. Auf die obige Beschreibung der Figuren 5 bis 9 wird Bezug genommen.

In einer weiteren Ausgestaltung, die in den Figuren nicht gezeigt ist, können auch auf der Schulter 20 der Sicherungsmutter 10 anstelle der Vorsprünge 40 Vertiefungen ausgebildet sein, zwischen denen sich aus dem zwischen den Vertiefungen verbleibenden Material zahn- oder rippenartige Strukturen ergeben, die ähnlich sein können wie in den Figuren 17 und 18 gezeigt. Auch in diesem Fall ist die Herstellung der Sicherung Mutter grundsätzlich wie mit Bezug auf die Figuren 5 bis 9 erläutert, wobei dann ebenfalls nicht Vorsprünge sondern die zahn- oder rippenartigen Strukturen 58 auf der Schulter verformt werden.

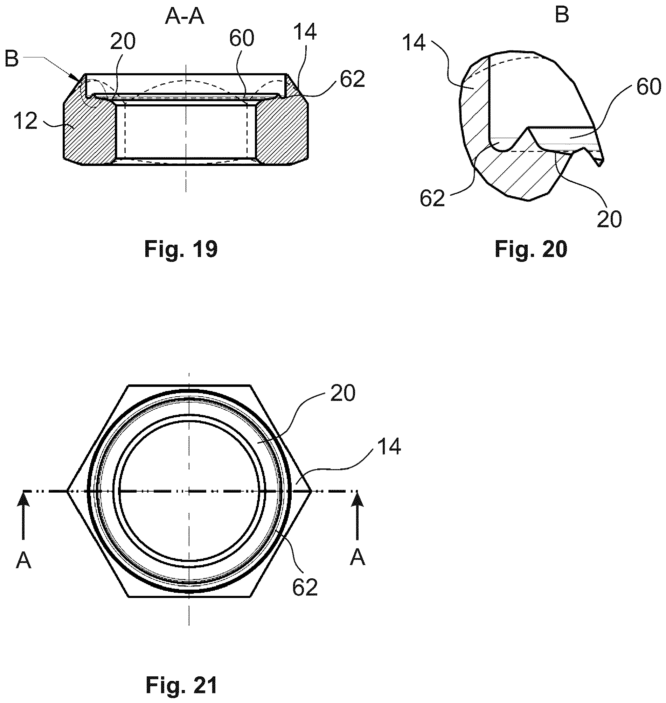

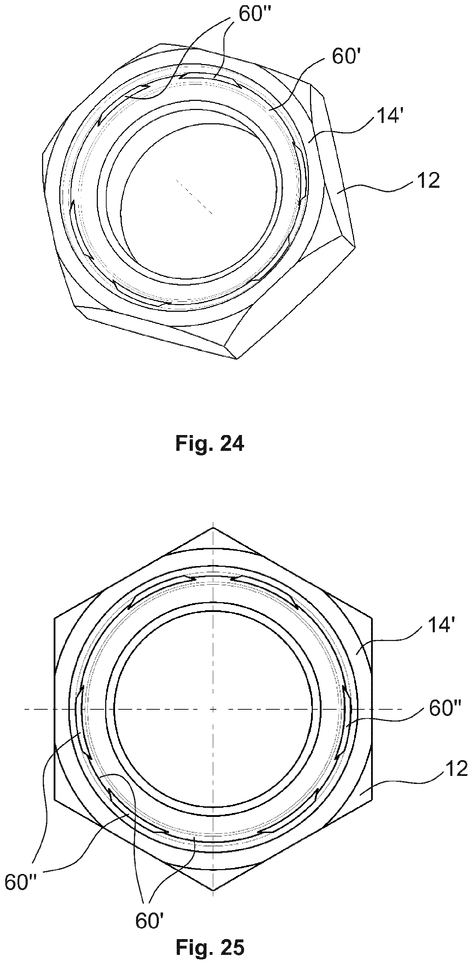

Eine weitere Ausgestaltung der Sicherungsmutter ist in den Fig. 19 bis 25 dargestellt. Die Sicherungsmutter ist mit einem Mutterkörper 12 und einer Sicherungs-Ringscheibe 22 grundsätzlich so aufgebaut, wie oben in Bezug auf die Fig. 1 bis 18 beschrieben, auf die Bezug genommen wird. Die Ringscheibe 22 kann insbesondere wie mit Bezug auf die Fig. 12 und 13 beschrieben ausgebildet sein. Im Folgenden soll nur auf die Unterschiede eingegangen werden. Es werden dieselben Bezugszeichen verwendet wie in den vorhergehenden Figuren, um gleiche oder entsprechende Merkmale zu bezeichnen. Soweit nichts anderes beschrieben ist, gelten die obigen Ausführungen zur Sicherungsmutter mutatis mutandis.

In dem Beispiel der Fig. 19 bis 25 wird zunächst auf der Schulter 14 eine in Umfangsrichtung umlaufende Rippe 60 ausgebildet. Diese kann zum Beispiel durch Drehbearbeitung des Mutterkörpers 12 hergestellt werden, indem angrenzend an den Kragen 14 ein umlaufender Einstich 62 vorgenommen wird. Optional kann zusätzlich auf der von dem Einstich 62 abgewandten Seite der Rippe 60, also in Richtung nach radial innen, Material von der Oberfläche der Schulter 20 abgetragen werden, um die Rippe 60 mit gewünschter Breite und Höhe zu definieren. Die Breite und Höhe der Rippe 60 kann grundsätzlich ähnlich sein wie die Breite und Höhe der in den vorhergehenden Ausführungsformen beschriebenen Vorsprünge 40.

Die Rippe 60 kann zum Beispiel eine maximale Breite von 3 mm vorzugsweise 1-2 mm an ihrer Basis, an der breitesten Stelle, haben. Die Höhe der Rippe über der Schulter, an ihrer höchsten Stelle, kann zum Beispiel etwa im Bereich von 0,5 mm bis 2 mm, beispielsweise bei etwa 1 mm liegen. Diese Werte sind selbstverständlich nur Beispiele und können abhängig von der Größe der Sicherungsmutter, dem Gewinde, dem verwendeten Material, der einzustellenden Haltekraft und anderen Faktoren variieren. Die Rippe kann z. B. einen grundsätzlich in etwa dreieckigen oder trapezförmigen Querschnitt haben, oder einen Querschnitt in Form eines Halbkreises, Halbovals oder einer Parabel.

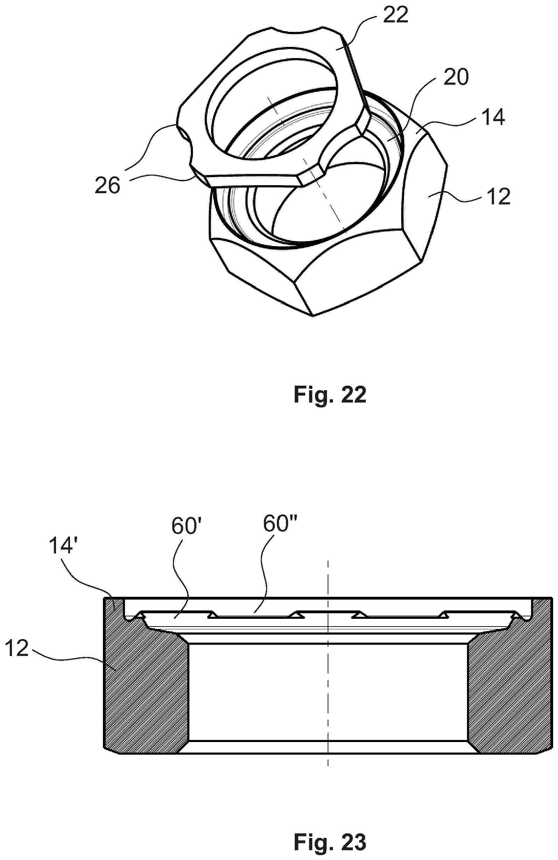

Fig. 22 zeigt, wie die Ringscheibe 22 auf den Mutterkörper 12 aufgesetzt wird. Nach dem Einsetzen der Ringscheibe 22 wird auch bei dieser Ausgestaltung der Kragen 14 umgebördelt, um die Ringscheibe 22 in der Ringnut 28 gegen Verdrehen gesichert festzusetzen, wie oben mit Bezug auf die Fig. 6 bis 9 beschrieben ist. In dem Beispiel der Fig. 19 bis 25 wird eine Ringscheibe 22 verwendet, die in radialer Richtung nach außen vorspringende Vorsprünge, zum Beispiel Klauen 26 aufweist, wie sie mit Bezug auf die Fig. 12 und 13 erläutert sind. Die Verbindung zwischen Ringscheibe und Mutterkörper, die Ausbildung des Gewindes und die Verformung der Ringscheibe können grundsätzlich wie oben mit Bezug auf die Figuren 1 bis 18 beschrieben erfolgen.

Die Fig. 23 bis 25 zeigen verschiedene Ansichten des Mutterkörpers, nachdem eine Ringscheibe, wie die in Fig. 22 gezeigte, eingesetzt war und wieder entnommen wurde. Das Entnehmen der Ringscheibe ist bei bestimmungsgemäßer Verwendung der Sicherungsmutter nicht vorgesehen. Um die Verformung der Rippe 60 nachzuweisen, kann zum Entnehmen der Ringscheibe der umgebördelte Teil des Kragens 14 jedoch z. B. abgefräst werden, sodass der in Fig. 23 gezeigte Kragenstummel 14' zurückbleibt.

Wie in den Fig. 23 bis 25 dargestellt, werden die Klauen 26 in die Rippe 60 hinein gedrückt und verformen die Rippe 60 und definieren so in Umfangsrichtung ausgerichtete Vorsprünge 60`, die durch den Klauen entsprechende Vertiefungen 60" in der Rippe 60 getrennt sind. Die Vertiefungen 60" können das Material der Rippe 60 in radialer Richtung vollständig oder teilweise verdrängen, sodass getrennte Vorsprünge 60' oder durch Restmaterial der Rippe 60 in Umfangsrichtung zusammenhängende Vorsprünge gebildet werden. In beiden Fällen sitzt die Ringscheibe 22 mit ihren Klauen 26 in den Vertiefungen 60" und ist darin gegen Verdrehen gesichert.

In einer alternativen Ausgestaltung kann eine umlaufende Rippe auch auf einer Oberfläche der Ringscheibe ausgebildet werden, und entsprechende Vorsprünge oder Klauen können auf der Schulter des Mutterkörpers in Umfangsrichtung angeordnet werden, sodass sich die Vorsprünge oder Klauen beim Umbördeln des Kragens in die Rippe auf der Ringscheibe eingraben. Der dadurch erzielte Effekt ist der gleiche wie oben in Bezug auf die Fig. 19 bis 25 beschrieben.

In der beschriebenen Ausgestaltung weist die Sicherungs-Ringscheibe 22 im vormontiertem Zustand eine in Richtung der Stirnseite des Mutterkörpers 12 konvexe Wölbung auf, also eine von dem Muttergewinde abgewandte Wölbung. Bei der Ausbildung des axialen Versatzes der Gewinde kann diese konvexe Wölbung etwas verringert werden, sie wird jedoch nicht ausgeglichen oder gar umgekehrt. Durch diese Vor-Wölbung der Sicherungs-Ringscheibe 22 im vorgefertigten Zustand kann ein definierteres Verformungsverhalten beim Ausbilden des axialen Versatzes gewährleistet und somit eine genauere Einstellung des axialen Versatzes und der daraus resultierenden Haltekraft der Sicherungsmutter erzielt werden.

Ein nicht gezeigter, in die Mutter eingeschraubter Gewindebolzen wird allseitig von der Ringscheibe 22 festgeklemmt, wobei die Federkraft der Ringscheibe in axialer Richtung und der axialer Versatz der Gewinde für die Klemmkraft maßgebend sind. Die Federkraft der Ringscheibe 22 wird maßgeblich durch ihre Elastizität bestimmt. Zusätzlich kann die Klemmkraft der Sicherungsmutter durch die Stärke des Kragens 14 eingestellt werden. Ein dünner Kragen, insbesondere ein dünnerer stirnseitiger Rand des Kragens kann dem Kragen eine gewisse Elastizität verleihen, sodass dieser beim Einschrauben des Bolzens etwas nachgeben kann.

## Patentansprüche

1. Sicherungsmutter mit einem Mutterkörper (12), der einen Gewindeabschnitt mit Innengewinde (16), eine sich daran anschließende umlaufende Schulter (20) und einen die Schulter umgebenden Kragen aufweist, und mit einer Ringscheibe (22, 22') aus Metall, wobei
der Kragen nach innen umgebogen ist und zwischen dem umgebogenen Kragen und der Schulter eine Ringnut (28) gebildet ist, in der die Ringscheibe aufgenommen ist, am inneren Umfang der Ringscheibe (22) ein dem Innengewinde (16) des Gewindeabschnitts entsprechendes Innengewinde (16') eingeschnitten ist und das Innengewinde (16') der Ringscheibe (22) gegenüber dem Innengewinde (16) des Mutterkörpers (12) axial um eine Strecke versetzt ist, **dadurch gekennzeichnet, dass**
an der Schulter oder an der Ringscheibe dort, wo die Ringscheibe und die Schulter einander überlappen, eine Reihe von Vorsprüngen (40, 44, 60`, 60") und/oder Vertiefungen (54) ausgebildet ist, die in axialer Richtung vorstehen bzw. eingeformt sind und um den Umfang der Schulter oder der Ringscheibe verteilt angeordnet sind.

2. Sicherungsmutter nach Anspruch 1, wobei die Schulter eine Schulterfläche aufweist, die relativ zu einer Radialebene der Sicherungsmutter zur Gewindeachse hin um einen Winkel α_s geneigt ist, wobei α_s im Bereich von 0° bis 15° liegt oder ungefähr 5°, oder 10° beträgt.

3. Sicherungsmutter nach einem der vorangehenden Ansprüche, wobei die Vorsprünge oder Vertiefungen an die Schulter angeformt bzw. eingeformt sind.

4. Sicherungsmutter nach Anspruch 3, wobei die Vorsprünge oder Vertiefungen an den Kragen angrenzen.

5. Sicherungsmutter nach Anspruch 3 oder 4, wobei die Vorsprünge oder Vertiefungen sich in radialer Richtung von dem Kragen bis über einen Teil der Schulter erstrecken, insbesondere bis über 1/2 bis 4/5 der radialen Abmessung der Schulter.

6. Sicherungsmutter nach einem der Ansprüche 3 bis 5, wobei die Breite, B, der Vorsprünge oder Vertiefungen im Verhältnis zum Mittenabstand, A, der Vorsprünge oder Vertiefungen dort, wo sie dem Kragen zugewandt sind, gleich oder ungefähr gleich B = b * A, wobei b im Bereich von 0,2 bis 1, spezieller von 0,5 bis 1 liegt oder ungefähr 1 oder ungefähr 0,5 beträgt.

7. Sicherungsmutter nach einem der vorangehenden Ansprüche, wobei die Vorsprünge oder Vertiefungen radial ausgerichtet und/oder um den Umfang der Schulter oder der Ringscheibe gleichmäßig verteilt angeordnet sind.

8. Sicherungsmutter nach einem der vorangehenden Ansprüche, wobei mindestens 12, 16, 24 oder 40 Vorsprünge oder Vertiefungen vorgesehen sind.

9. Sicherungsmutter nach Anspruch 1 oder 2, wobei die die Vorsprünge oder Vertiefungen an einer Oberfläche der Ringscheibe, die dem Mutterkörper zugewandt ist, angeformt bzw. eingeformt sind.

10. Sicherungsmutter nach einem der vorangehenden Ansprüche, wobei die Vorsprünge mit konvexer Wölbung gebildet sind, insbesondere eines kreisförmigen oder ovalen Doms oder eines liegenden Halbkreiszylinders, oder die Form eines eckigen Vorsprungs, insbesondere eines liegenden Dreieckszylinders oder eines Tetraeders, oder näherungsweise eine solche Form haben.

11. Sicherungsmutter nach einem der vorangehenden Ansprüche, wobei die Vorsprünge mit einer Scheitellinie gebildet sind, die relativ zu einer Radialebene der Sicherungsmutter um einen Winkel α_v geneigt ist, wobei a _v im Bereich von 30° bis 60° liegt oder ungefähr 40°, 45° oder 50° beträgt.

12. Sicherungsmutter nach einem der vorangehenden Ansprüche, wobei die Breite der Vorsprünge oder der Vertiefungen und/oder die Höhe der Vorsprünge bzw. die Tiefe der Vertiefungen in radialer Richtung nach Innen abnehmen.

13. Sicherungsmutter nach einem der vorangehenden Ansprüche, wobei die Vertiefungen rippenartige Strukturen eingrenzen.

14. Sicherungsmutter nach einem der Ansprüche 1 bis 4, wobei auf der Schulter des Mutterkörpers in Umfangsrichtung ausgerichtete Vorsprünge gebildet sind.

15. Sicherungsmutter nach Anspruch 14, wobei auf der Schulter des Mutterkörpers eine in Umfangsrichtung umlaufende ein- oder mehrteilige Rippe gebildet ist, in die durch das Aufnehmen der Ringscheibe in der Ringnut Vertiefungen eingeformt sind, welche die Rippe in die mehreren in Umfangsrichtung angeordneten Vorsprünge umformen.

16. Sicherungsmutter nach Anspruch 15, wobei die umlaufende Rippe vor dem Aufnehmen der Ringscheibe in der Ringnut einteilig ist und durch einen stirnseitigen Einstich in die Schulter angrenzend an den Kragen gebildet ist.

17. Sicherungsmutter nach einem der Ansprüche 1 bis 4, wobei auf der Oberfläche der Ringscheibe, die der Schulter des Mutterkörpers zugewandt ist, in Umfangsrichtung ausgerichtete Vorsprünge gebildet sind.

18. Sicherungsmutter nach Anspruch 17, wobei auf der Oberfläche der Ringscheine eine in Umfangsrichtung umlaufende ein- oder mehrteilige Rippe gebildet ist, in die durch das Aufnehmen der Ringscheibe in der Ringnut Vertiefungen eingeformt sind, welche die Rippe in die mehreren in Umfangsrichtung angeordneten Vorsprünge umformen.

19. Sicherungsmutter nach Anspruch 18, wobei die umlaufende Rippe vor dem Aufnehmen der Ringscheibe in der Ringnut einteilig ist und durch einen stirnseitigen Einstich in die Oberfläche der Ringscheibe gebildet ist.

20. Sicherungsmutter nach einem der vorangehenden Ansprüche, wobei Ringscheibe in der Ringnut kraft- und formschlüssig gehalten ist.

21. Sicherungsmutter nach einem der vorangehenden Ansprüche, wobei die Ringscheibe (22) eine konstante Dicke hat oder die Dicke der Ringscheibe (22) an ihrem Innendurchmesser größer ist als die Dicke der Ringscheibe (22) an ihrem Außendurchmesser.

22. Sicherungsmutter nach einem der vorangehenden Ansprüche, wobei das Innengewinde (16') der Ringscheibe (22) gegenüber dem Innengewinde (16) des Mutterkörpers (12) um eine Strecke axial versetzt ist, die ungefähr 3-30 % vorzugsweise 10-20% der Gewindesteigung beträgt.

23. Sicherungsmutter nach einem der vorangehenden Ansprüche, wobei die Dicke der Ringscheibe (22) an ihrem Innendurchmesser gleich oder ungefähr gleich einer Gewindesteigung des Innengewindes (16) ist oder zwischen einer und zwei Gewindesteigungen beträgt.

24. Sicherungsmutter nach einem der vorangehenden Ansprüche, wobei die Ringscheibe (22, 22') in Richtung der Stirnseite der Sicherungsmutter konvex gewölbt ist.

25. Sicherungsmutter nach einem der vorangehenden Ansprüche, wobei in den äußeren Umfang der Ringscheibe (22) eine oder mehrere über den Umfang der Ringscheibe verteilte Aussparungen eingeformt sind, die einen oder mehrere Fortsätze, insbesondere Klauen (26) an dem Umfang der Ringscheibe definieren.

26. Sicherungsmutter nach einem der vorangehenden Ansprüche, wobei die Oberfläche der Ringscheibe (22) einen oder mehrere über den Umfang der Ringscheibe verteilte Vorsprünge aufweist..

27. Verfahren zum Herstellen einer Sicherungsmutter nach einem der vorangehenden Ansprüche, **dadurch gekennzeichnet, dass** die Ringscheibe (22) innerhalb des Kragens auf die Schulter des noch gewindelosen Mutterkörpers (12) aufgelegt wird, eine erste Kraft in axialer Richtung auf den Kragen ausgeübt wird, um den Kragen nach innen umzubördeln und zwischen dem umgebördelten Kragen und der Schulter eine Ringnut (28) zu bilden, in der die Ringscheibe axial eingeklemmt wird, wobei beim Ausüben der ersten Kraft die Vorsprünge oder Vertiefungen um einer erste Strecke verformt werden,
dann in einem einzigen Arbeitsgang ein Innengewinde (16, 16') in den Mutterkörper (12) und die Ringscheibe (22) geschnitten wird, und
anschließend eine zweite Kraft in axialer Richtung auf den Kragen und die Ringnut (28), in der die Ringscheibe eingeklemmt ist, ausgeübt wird, um die Ringscheibe in axialer Richtung zu verlagern, wobei beim Ausüben der zweiten Kraft die Vorsprünge oder Vertiefungen um einer zweite Strecke verformt werden.

28. Verfahren nach Anspruch 27 zum Herstellen einer Sicherungsmutter nach den Ansprüchen 15 oder 16, **dadurch gekennzeichnet, dass**
auf der Schulter des Mutterkörpers die umlaufende Rippe durch einen stirnseitigen Einstich in die Schulter angrenzend an den Kragen gebildet wird;
die Ringscheibe (22) innerhalb des Kragens auf die Schulter des noch gewindelosen Mutterkörpers (12) aufgelegt wird,
eine erste Kraft in axialer Richtung auf den Kragen ausgeübt wird, um den Kragen nach innen umzubördeln und zwischen dem umgebördelten Kragen und der Schulter eine Ringnut (28) zu bilden, in der die Ringscheibe axial eingeklemmt wird, wobei beim Ausüben der ersten Kraft die Klauen in die umlaufende Rippe eindringen und in so gebildeten Vertiefungen in der Rippe zu liegen kommen.

29. Verfahren nach Anspruch 28, **dadurch gekennzeichnet, dass**
in einem einzigen Arbeitsgang ein Innengewinde (16, 16') in den Mutterkörper (12) und die Ringscheibe (22) geschnitten wird, und
anschließend eine zweite Kraft in axialer Richtung auf den Kragen und die Ringnut (28), in der die Ringscheibe eingeklemmt ist, ausgeübt wird, um die Ringscheibe in axialer Richtung zu verlagern, wobei beim Ausüben der zweiten Kraft die Klauen um ein weiteres Strecke in die Rippe eindringen.

30. Verfahren nach einem der Ansprüche 27 bis 29, **dadurch gekennzeichnet, dass** die Ringscheibe (22; 22') in einem Vorverarbeitungsschritt mit konvexer Wölbung hergestellt wird und so auf die Schulter des Mutterkörpers (12) aufgelegt wird, dass die Ringscheibe (22; 22') in Richtung der Stirnseite der Sicherungsmutter konvex gewölbt ist, wobei die konvexe Wölbung der Ringscheibe bei der Verformung beibehalten oder im Wesentlichen beibehalten wird.

## Claims

1. Lock nut comprising a nut body (12), which has a threaded portion with an inner thread (16), a peripheral shoulder (20) adjoining thereon, and a collar surrounding the shoulder, and comprising an annular disc (22, 22') made of metal, wherein
the collar is bent inward and an annular groove (28), in which the annular disc is accommodated, is formed between the bent-over collar and the shoulder,
an inner thread (16') corresponding to the inner thread (16) of the threaded portion is cut into the inner periphery of the annular disc (22), and the inner thread (16') of the annular disc (22) is offset relative to the inner thread (16) of the nut body (12) by an axial distance, **characterized in that**
a series of projections (40, 44, 60', 60") and/or depressions (54), which project or are formed in the axial direction, is configured on the shoulder or on the annular disc where the annular disc and the shoulder overlap each other, and are arranged distributed across the periphery of the shoulder or of the annular disc.

2. Lock nut according to claim 1, wherein the shoulder has a shoulder surface which is inclined toward the thread axis at an angle α_s relative to a radial plane of the lock nut, wherein α_s lies in the range from 0° to 15° or is approximately 5° or 10°.

3. Lock nut according to one of the preceding claims, wherein the the projections or depressions are formed onto or formed into the shoulder

4. Lock nut according to claim 3, wherein the projections or depressions are adjacent to the collar.

5. Lock nut according to claim 3 or 4, wherein the projections or depressions extend in the radial direction from the collar and across a part of the shoulder, in particular across ½ to 4/5 of the radial dimension of the shoulder.

6. Lock nut according to one of claims 3 to 5, wherein, where the projections or depressions face the collar, the width B of the projections or depressions relative to the center distance A of the projections or depressions is equal to or approximately equal to B = b * A, where b lies in the range from 0.2 to 1, more specifically from 0.5 to 1, or is approximately 1 or approximately 0.5.

7. Lock nut according to one of the preceding claims, wherein the projections or depressions are aligned radially and/or are arranged uniformly distributed across the periphery of the shoulder or of the annular disc.

8. Lock nut according to one of the preceding claims, wherein at least 12, 16, 24, or 40 projections or depressions are provided.

9. Lock nut according to claim 1 or 2, wherein the projections or depressions are formed on or formed in a surface of the annular disc which faces the nut body.

10. Lock nut according to one of the preceding claims, wherein the projections are formed with a convex curvature, in particular a circular or oval dome or an oblique semi cylinder, or have the shape of an angular projection, in particular an oblique delta cylinder or a tetrahedron or have approximately such a shape.

11. Lock nut according to one of the preceding claims, wherein the projections are formed with a crown line, which is inclined at an angle α_v relative to a radial plane of the lock nut, wherein α_v lies in the range from 30° to 60° or is approximately 40°, 45° or 50°.

12. Lock nut according to one of the preceding claims, wherein the the width of the projections or depressions and/or the height of the projections or the depth of the depressions decreases inwards in the radial direction.

13. Lock nut according to one of the preceding claims, wherein the depressions delimit rib-like structures.

14. Lock nut according to one of claims 1 to 4, wherein projections, aligned in the circumferential direction, are formed on the shoulder of the nut body.

15. Lock nut according to claim 14, wherein a one-part or multi-part circumferential rib is formed on the shoulder of the nut body in the circumferential direction, into which rib depressions are formed by the accommodation of the annular disc in the annular groove, which depressions reshape the rib into the multiple projections arranged in the circumferential direction.

16. Lock nut according to claim 15, wherein the circumferential rib is one-part prior to the accommodation of the annular disc in the annular groove, and is formed adjacent to the collar by an end-face groove.

17. Lock nut according to one of claims 1 to 4, wherein projections, aligned in the circumferential direction, are formed on the surface of the annular disc which faces the shoulder of the nut body.

18. Lock nut according to claim 17, wherein a one-part or multi-part circumferential rib is formed on the surface of the annular disc in the circumferential direction, into which rib depressions are formed by the accommodation of the annular disc in the annular groove, which depressions reshape the rib into the multiple projections arranged in the circumferential direction.

19. Lock nut according to claim 18, wherein the circumferential rib is one-part prior to the accommodation of the annular disc in the annular groove, and is formed into the surface of the annular disc by an end-face groove.

20. Lock nut according to one of the preceding claims, wherein the annular disc is held positively and non-positively in the annular groove.

21. Lock nut according to one of the preceding claims, wherein the annular disc (22) has a constant thickness, or the thickness of the annular disc (22) at its inner diameter is greater than the thickness of the annular disc (22) at its outer diameter.

22. Lock nut according to one of the preceding claims, wherein the inner thread (16') of the annular disc (22) is offset relative to the inner thread (16) of the nut body (12) by an axial distance which is approximately 3-30%, preferably 10-20% of the thread pitch.

23. Lock nut according to one of the preceding claims, wherein the thickness of the annular disc (22) at its inner diameter is equal to or approximately equal to one thread pitch of the inner thread (16) or is between one and two thread pitches.

24. Lock nut according to one of the preceding claims, wherein the annular disc (22, 22') is convexly curved in the direction of the front face of the lock nut.

25. Lock nut according to one of the preceding claims, wherein one or more recesses are formed in the outer periphery of the annular disc (22) and distributed across the periphery of the annular disc, which recesses define one or more protrusions, in particular lugs (26) on the periphery of the annular disc.

26. Lock nut according to one of the preceding claims, wherein the surface of the annular disc (22) has one or more projections distributed across the periphery of the annular disk.

27. Method for producing a lock nut according to one of the preceding claims, **characterized in that** the annular disc (22) is placed within the collar on the shoulder of the still threadless nut body (12), a first force is exerted on the collar in the axial direction in order to crimp the collar inward and to form an annular groove (28), in which the annular disc is axially clamped, between the crimped collar and the shoulder, wherein the projections or depressions are deformed by a first amount during the exertion of the first force,
then, an inner thread (16, 16') is cut into the nut body (12) and the annular ring (22) in a single work cycle, and
subsequently, a second force is exerted in the axial direction on the collar and on the annular groove (28) in which the annular disc is clamped in order to displace the annular disc in the axial direction, wherein the projections or depressions are deformed by a second amount during the exertion of the second force.

28. Method according to claim 27 for producing a lock nut according to claims 15 or 16,
**characterized in that** the circumferential rib on the shoulder of the nut body is formed adjacent to the collar by an end-face groove;
the annular disc (22) is placed within the collar on the shoulder of the still threadless nut body (12);
a first force is exerted on the collar in the axial direction in order to crimp the collar inward and to form an annular groove (28), in which the annular disc is axially clamped, between the crimped collar and the shoulder, wherein the lugs penetrate into the circumferential rib during the exertion of the first force and come to rest in depressions thus formed in the rib.

29. Method according to claim 28, **characterized in that**
an inner thread (16, 16') is cut into the nut body (12) and the annular ring (22) in a single work cycle, and
subsequently, a second force is exerted in the axial direction on the collar and on the annular groove (28) in which the annular disc is clamped in order to displace the annular disc in the axial direction, wherein the lugs penetrate an additional distance into the circumferential rib during the exertion of the second force.

30. Method according to one of claims 27 to 29, **characterized in that** the annular disc (22; 22') is produced in a preprocessing step with a convex curvature and placed on the shoulder of the nut body (12) such that the annular disc (22; 22') is convexly curved in the direction of the front face of the lock nut, wherein the convex curvature of the annular disc is retained or substantially retained during the deformation.

## Revendications

1. Écrou de blocage avec un corps d'écrou (12), qui comprend une portion filetée avec un filetage interne (16), un épaulement circulaire (20) qui s'y raccorde et un col entourant l'épaulement, et avec un disque annulaire (22, 22') en métal, dans lequel
le col est plié vers l'intérieur et, entre le col plié et l'épaulement, est formée une rainure annulaire (28), dans laquelle est logé le disque annulaire, sur la circonférence interne du disque annulaire (22), est découpé un filetage interne (16') correspondant au filetage interne (16) de la portion filetée et le filetage interne (16') du disque annulaire (22) est décalé axialement d'une distance par rapport au filetage interne (16) du corps d'écrou (12), **caractérisé en ce que**
sur l'épaulement ou sur le disque annulaire, là où le disque annulaire et l'épaulement se chevauchent l'un l'autre, est formée une rangée de saillies (40, 44, 60', 60") et/ou de renfoncements (54), qui dépassent ou sont creusés dans la direction axiale et sont répartis autour de la circonférence de l'épaulement ou du disque annulaire.

2. Écrou de blocage selon la revendication 1, dans lequel l'épaulement comprend une surface d'épaulement qui est inclinée par rapport à un plan radial de l'écrou de fixation, en direction de l'axe du filetage d'un angle α_s, dans lequel α_s est de l'ordre de 0° à 15° ou est d'environ 5° ou de 10°.

3. Écrou de blocage selon l'une des revendications précédentes, dans lequel les saillies ou les renfoncements sont formés ou creusés sur l'épaulement.

4. Écrou de blocage selon la revendication 3, dans lequel les saillies ou les renfoncements sont adjacents au col.

5. Écrou de blocage selon la revendication 3 ou 4, dans lequel les saillies ou les renfoncements s'étendent dans la direction radiale du col jusqu'à une partie de l'épaulement, plus particulièrement jusqu'à 1/2 à 4/5 de la dimension radiale de l'épaulement.

6. Écrou de blocage selon l'une des revendications 3 à 5, dans lequel la largeur B des saillies ou des renfoncements, par rapport à la distance centrale A des saillies ou des renfoncements, là où ils sont orientés vers le col, est approximativement égal à : B = b * A, dans laquelle b est de l'ordre de 0,2 à 1, plus particulièrement de 0,5 à 1 ou est d'environ 1 ou d'environ 0,5.

7. Écrou de blocage selon l'une des revendications précédentes, dans lequel les saillies ou les renfoncements sont orientés radialement et/ou sont répartis uniformément autour de la circonférence de l'épaulement ou du disque annulaire.

8. Écrou de blocage selon l'une des revendications précédentes, dans lequel au moins 12, 16, 24 ou 40 saillies ou renfoncement sont prévus.

9. Écrou de blocage selon la revendication 1 ou 2, dans lequel les saillies ou les renfoncements sont formés ou creusés sur une surface du disque annulaire qui est orientée vers le corps d'écrou.

10. Écrou de blocage selon l'une des revendications précédentes, dans lequel les saillies sont réalisés avec une courbure convexe, plus particulièrement un dôme circulaire ou ovale ou un demi-cylindre couché ou présente la forme d'une saillie angulaire, plus particulièrement d'un cylindre triangulaire couché ou d'un tétraèdre, ou présentent approximativement une telle forme.

11. Écrou de blocage selon l'une des revendications précédentes, dans lequel les saillies sont réalisées selon une ligne de sommet, qui est inclinée par rapport à un plan radial de l'écrou de blocage d'un angle α_v, dans lequel α_v est de l'ordre de 30° à 60° ou est d'environ 40°, 45° ou 50°.

12. Écrou de blocage selon l'une des revendications précédentes, dans lequel la largeur des saillies ou des renfoncements et/ou la hauteur des saillies ou la profondeur des renfoncements diminue dans la direction radiale vers l'intérieur.

13. Écrou de blocage selon l'une des revendications précédentes, dans lequel les renfoncements délimitent des structures en forme de nervures.

14. Écrou de blocage selon l'une des revendications 1 à 4, dans lequel, sur l'épaulement du corps d'écrou, sont réalisées des saillies orientées dans la direction de la circonférence.

15. Écrou de blocage selon la revendication 14, dans lequel, sur l'épaulement du corps d'écrou, est réalisée une nervure en une ou plusieurs parties, s'étendant dans la direction de la circonférence, dans laquelle, grâce au logement du disque annulaire dans la rainure annulaire, sont creusés des renfoncements, qui déforment la nervure dans les plusieurs saillies disposées dans la direction de la circonférence.

16. Écrou de blocage selon la revendication 15, dans lequel la nervure circulaire est constituée d'une seule pièce avant le logement du disque annulaire dans la rainure annulaire et est constituée d'une encoche frontale dans l'épaulement, près du col.

17. Écrou de blocage selon l'une des revendications 1 à 4, dans lequel, sur la surface du disque annulaire, qui est orientée vers l'épaulement du corps d'écrou, sont réalisées des saillies orientées dans la direction de la circonférence.

18. Écrou de blocage selon la revendication 17, dans lequel, sur la surface du disque annulaire, est réalisée une nervure en une ou plusieurs parties, s'étendant dans la direction de la circonférence, dans laquelle, grâce au logement du disque annulaire dans la rainure annulaire, sont creusés des renfoncements qui déforment la nervure dans les plusieurs saillies disposées dans la direction de la circonférence.

19. Écrou de blocage selon la revendication 18, dans lequel la nervure circulaire est constituée d'une seule pièce avant le logement du disque annulaire dans la rainure annulaire et est constituée d'une encoche frontale dans la surface du disque annulaire.

20. Écrou de blocage selon l'une des revendications précédentes, dans lequel le disque annulaire est maintenu par force ou par complémentarité de forme dans la rainure annulaire.

21. Écrou de blocage selon l'une des revendications précédentes, dans lequel le disque annulaire (22) présente une épaisseur constante ou l'épaisseur du disque annulaire (22) est supérieure, au niveau de son diamètre intérieur, à l'épaisseur du disque annulaire (22) au niveau de son diamètre extérieur.

22. Écrou de blocage selon l'une des revendications précédentes, dans lequel le filetage interne (16') du disque annulaire (22) est décalé axialement, par rapport au filetage interne (16) du corps d'écrou (12), d'une distance qui représente environ 3 - 30 %, de préférence 10 - 20 % du pas du filetage.

23. Écrou de blocage selon l'une des revendications précédentes, dans lequel l'épaisseur du disque annulaire (22) au niveau de son diamètre interne, égale ou approximativement égale à un pas de filetage du filetage interne (16) ou représente entre un et deux pas de filetage.

24. Écrou de blocage selon l'une des revendications précédentes, dans lequel le disque annulaire (22, 22') est incurvé de manière convexe en direction de la face frontale de l'écrou de blocage.

25. Écrou de blocage selon l'une des revendications précédentes, dans lequel, dans la circonférence externe du disque annulaire (22), sont réalisés un ou plusieurs évidements répartis sur la circonférence du disque annulaire, définissent un ou plusieurs prolongements, plus particulièrement des griffes (26), sur la circonférence du disque annulaire.

26. Écrou de blocage selon l'une des revendications précédentes, dans lequel la surface du disque annulaire (22) comprend une ou plusieurs saillies réparties sur la circonférence du disque annulaire.

27. Procédé de fabrication d'un écrou de blocage selon l'une des revendications précédentes, **caractérisé en ce que** le disque annulaire (22) est posé à l'intérieur du col sur l'épaulement du corps d'écrou (12) encore non fileté,
une première force est appliquée dans la direction axiale sur le col, afin de rabattre le col vers l'intérieur et afin de former, entre le col rabattu et l'épaulement, une rainure annulaire (28) dans laquelle le disque annulaire est coincé axialement, dans lequel, lors de l'application de la première force, les saillies ou les renfoncements sont déformés sur une première distance,
puis, dans une seule étape de travail, un filetage interne (16, 16') est réalisé dans le corps d'écrou (12) et dans le disque annulaire (22) et
ensuite, une deuxième force est appliquée dans la direction axiale sur le col et les rainure annulaire (28) dans laquelle le disque annulaire est coincé, afin de déplacer le disque annulaire dans la direction axiale, dans lequel, lors de l'application de la deuxième force, les saillies ou renfoncements sont déformés sur une deuxième distance.

28. Procédé selon la revendication 27 pour la fabrication d'un écrou de blocage selon les revendications 15 ou 16, **caractérisé en ce que**, sur l'épaulement du corps d'écrou, la nervure circulaire est réalisée grâce à une encoche frontale dans l'épaulement près du col ;
le disque annulaire (22) est posé à l'intérieur du col sur l'épaulement du corps d'écrou (12) encore non fileté,
une première force est appliquée dans la direction axiale sur le col, afin de rabattre le col vers l'intérieur et afin de former, entre le col rabattu et l'épaulement, une rainure annulaire (28) dans laquelle le disque annulaire est coincé axialement, dans lequel, lors de l'application de la première force, les griffes pénètrent dans la nervure circulaire et viennent se poser dans les renfoncements ainsi réalisés dans la nervure.

29. Procédé selon la revendication 28, **caractérisé en ce que**
dans une seule étape de travail, un filetage interne (16, 16') est réalisé dans le corps d'écrou (12) et dans le disque annulaire (22) et
ensuite, une deuxième force est appliquée dans la direction axiale sur le col et les rainure annulaire (28) dans laquelle le disque annulaire est coincé, afin de déplacer le disque annulaire dans la direction axiale, dans lequel, lors de l'application de la deuxième force, les griffes pénètrent dans la nervure d'une distance supplémentaire.

30. Procédé selon l'une des revendications 27 à 29, **caractérisé en ce que** le disque annulaire (22 ; 22') est fabriqué dans une étape de pré-traitement avec une courbure convexe et posé sur l'épaulement du corps d'écrou (12) de sorte que le disque annulaire (22 ; 22') est incurvé de manière convexe en direction de la face frontale, dans lequel la courbure convexe du disque annulaire est conservée ou globalement conservée lors de la déformation.
